# FASCICULE DE BREVET EUROPEEN

(11) **EP 2 434 933 B1**
(45) Date de publication et mention de la délivrance du brevet: **03.04.2013**
(21) Numéro de dépôt: 10728808.6
(22) Date de dépôt: 21.05.2010
(51) Int. Cl.: A47J 43/044, A47J 43/046, A47J 43/07

(54) **APPAREIL ELECTROMENAGER DE PREPARATION CULINAIRE COMPORTANT UN SOCLE DE RECEPTION D'UN RECIPIENT DE TRAVAIL COMPRENANT UNE PLAQUE CHAUFFANTE**
ELEKTRHAUSHALTSGERÄT FÜR SPEISENZUBEREITUNG MIT EIENR BASIS ZUR AUFNAHME EINES ARBEITSGEFÄSSES MIT EINER WÄRMEPLATTE
ELECTRIC DOMESTIC APPLIANCE FOR FOOD PREPARATION, COMPRISING A BASE FOR RECEIVING A WORKING VESSEL INCLUDING A HEATING PLATE

(30) Priorité: 29.05.2009 FR 0902602
(43) Date de publication de la demande: 04.04.2012
(73) Titulaire: SEB S.A., 69130 Ecully (FR)
(72) Inventeur: DESHAYES, Jean-Louis, F-53700 Averton (FR); GERARD, Emmanuel, F-61410 Couterne (FR); BLANCHARD, Thierry, F-53000 Laval (FR)
(74) Mandataire: Bourrières, Patrice
(86) Numéro de dépôt international: PCT/FR2010/050997
(87) Numéro de publication internationale: WO 2010/136711

(56) Documents cités:
- WO-A-2007/088320

## Description

La présente invention se rapporte au domaine technique général des appareils électroménagers de préparation culinaire comportant un récipient de travail amovible recevant un outil rotatif et comprenant un boîtier renfermant un moteur pour l'entraînement de l'outil rotatif et se rapporte plus particulièrement aux appareils électroménagers de préparation culinaire dans lesquels le boîtier comprend un socle de réception du récipient de travail muni d'une plaque chauffante destinée à être appliquée contre le fond du récipient de travail.

Il est connu, de la demande de brevet WO 2007 088 320, un appareil de préparation culinaire comportant un boîtier comportant un socle de réception d'un récipient de travail amovible comprenant une plaque chauffante destinée à être appliquée contre le fond du récipient et un dispositif de fixation baïonnette permettant de verrouiller le récipient de travail sur le socle de réception. Dans le mode de réalisation illustré à la figure 6b de ce document, la plaque chauffante est montée de manière élastique sur le socle de réception de manière à ce que cette dernière puisse s'aligner parfaitement avec le fond du récipient lorsque le récipient de travail est verrouillé sur le socle au moyen de la fixation baïonnette.

Une telle solution technique présente l'avantage de permettre le rattrapage d'un défaut de parallélisme entre la plaque chauffante et le fond du récipient, du fait notamment des dispersions de fabrication, ce qui permet d'assurer un meilleur transfert thermique entre la plaque chauffante et le récipient de travail.

Cependant, avec une telle solution technique, la mobilité de la plaque chauffante peut être rendue difficile par la présence des câbles d'alimentation électrique de la résistance chauffante qui, du fait de leur rigidité, peuvent gêner le mouvement de la plaque chauffante de sorte que cette dernière peut rester coincée dans une position inadéquate. Il est donc nécessaire de prévoir des câbles électriques de plus grande longueur, ce qui pose des problèmes de coût et d'encombrement. De plus, la mobilité de la plaque chauffante peut engendrer des problèmes de fiabilité au niveau de la connexion électrique.

Une telle solution de plaque chauffante mobile présente également l'inconvénient de rendre difficile la réalisation de l'étanchéité à la périphérie de la plaque chauffante, sans que cela n'entrave la liberté de mouvement de la plaque chauffante. Or, cette étanchéité est indispensable pour éviter que tout liquide ne pénètre à l'intérieur du socle de réception et ne provoque un court-circuit électrique dans la zone de la plaque chauffante.

Enfin, dans cette solution selon l'art antérieur, le socle de réception muni de la plaque chauffante mobile est utilisé avec un récipient de travail comportant un fond plat disposé à l'extrémité inférieure du récipient, de sorte que le fond plat présente l'inconvénient d'être très exposé au choc lorsque le récipient est retiré du socle. Il s'ensuit un risque important de déformation du fond du récipient, lors d'un choc au cours de la manipulation du récipient, ce qui peut conduire à une diminution très importante du transfert thermique entre la plaque chauffante et le récipient de travail lorsque le récipient est disposé sur le socle de réception.

Aussi, un but de la présente invention est de remédier à ces inconvénients en proposant un appareil de préparation culinaire, comportant un boîtier comprenant un socle de réception d'un récipient de travail muni d'une plaque chauffante, qui soit simple et économique à réaliser et présentant un excellent transfert thermique entre le fond du récipient et la plaque chauffante.

Un autre but de la présente invention est de proposer un appareil présentant une grande fiabilité d'utilisation.

A cet effet, l'invention se rapporte à un appareil électroménager de préparation culinaire comportant un récipient de travail comprenant un fond surmonté d'une enveloppe et un boîtier renfermant un moteur pour l'entraînement d'un outil rotatif disposé dans le récipient de travail, le boîtier comportant un socle de réception sur lequel le récipient de travail peut être monté de manière amovible, le socle de réception comportant une plaque chauffante destinée à venir au contact thermique du fond du récipient de travail et des moyens d'accouplement permettant de verrouiller le récipient de travail sur le socle de réception, caractérisé en ce que les moyens d'accouplement comprennent des moyens de rappel générant un effort tendant à déplacer le récipient de travail vers la plaque chauffante afin d'appliquer le fond du récipient de travail sous contrainte contre ladite plaque chauffante.

Selon une autre caractéristique de l'invention, les moyens de rappel sont des moyens de rappel élastiques qui sont mis sous tension lorsque le récipient de travail est verrouillé sur le socle de réception.

Une telle caractéristique présente l'avantage de permettre une mise sous tension des moyens de rappel par l'action mécanique de verrouillage.

Selon une autre caractéristique de l'invention, la plaque chauffante est montée de manière fixe sur le socle de réception. Une telle caractéristique permet de simplifier le montage.

Selon une autre caractéristique de l'invention, la plaque chauffante fait saillie sur le socle de réception.

Une telle caractéristique présente l'avantage de simplifier le nettoyage de la plaque chauffante et du socle de réception.

Selon une autre caractéristique de l'invention, le récipient de travail comporte une jupe périphérique s'étendant sous le fond du récipient de travail.

Une telle jupe périphérique présente l'avantage de créer une barrière de protection sous le fond du récipient, ce qui permet de limiter les risques de diminution des performances de chauffage par détérioration du fond du récipient.

Selon une autre caractéristique de l'invention, les moyens d'accouplement comprennent une liaison de type baïonnette.

Selon encore une autre caractéristique de l'invention, la liaison de type baïonnette comprend des rampes de verrouillage portées par le boîtier coopérant avec des ergots portés par le récipient de travail.

Selon encore une autre caractéristique de l'invention, les rampes de verrouillage sont solidaires d'un élément support monté mobile en translation par rapport au socle de réception, selon un axe perpendiculaire au plan de la plaque chauffante.

Selon une autre caractéristique de l'invention, l'élément support est disposé sous la plaque chauffante, les moyens de rappel générant un effort tendant à éloigner l'élément support de la plaque chauffante.

Selon une autre caractéristique de l'invention, la plaque chauffante est portée par un module de chauffage destiné à être monté dans une cavité du socle de réception, le module de chauffage intégrant également l'élément support.

Une telle caractéristique présente l'avantage de simplifier le montage, l'ensemble des éléments relatifs à la plaque chauffante et aux moyens d'accouplement du récipient de travail sur la plaque chauffante étant intégrés dans un module de chauffage qui est assemblé en dehors du boîtier avant d'être fixé sur le socle de réception.

Selon une autre caractéristique de l'invention, les moyens de rappel sont des ressorts.

Selon une autre caractéristique de l'invention, le fond du récipient comporte un diffuseur thermique rapporté contre une tôle métallique définissant l'enveloppe du récipient.

Selon une autre caractéristique de l'invention, le fond du récipient de travail supporte un axe de guidage de l'outil rotatif, la plaque chauffante comportant un renfoncement en regard de l'axe de guidage.

Une telle caractéristique permet d'éviter que la zone de la plaque chauffante disposée à proximité de l'axe de guidage ne vienne directement au contact du fond du récipient de travail, ce qui permet d'éviter la surchauffe de l'axe de guidage de l'outil rotatif.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil de préparation culinaire selon un mode particulier de réalisation de l'invention, le récipient de travail, le couvercle et le bras de transmission étant représentés démontés du boîtier de l'appareil ;
- la figure 2 est une vue de dessus du boîtier de l'appareil représenté seul ;
- la figure 3 est une vue en coupe du boîtier et du récipient de travail de l'appareil selon la ligne III-III de la figure 2 ;
- la figure 4 est une vue en perspective du module de chauffage et du récipient de travail de l'appareil de la figure 1, ces derniers étant représentés désaccouplés l'un de l'autre ;
- la figure 5 est une vue en perspective partiellement éclatée du module de chauffage de l'appareil de la figure 1 ;
- la figure 6 est une autre vue en perspective partiellement éclatée du module de chauffage de la figure 5.

Seuls les éléments nécessaires à la compréhension de l'invention ont été représentés. Pour faciliter la lecture des dessins, les mêmes éléments portent les mêmes références d'une figure à l'autre.

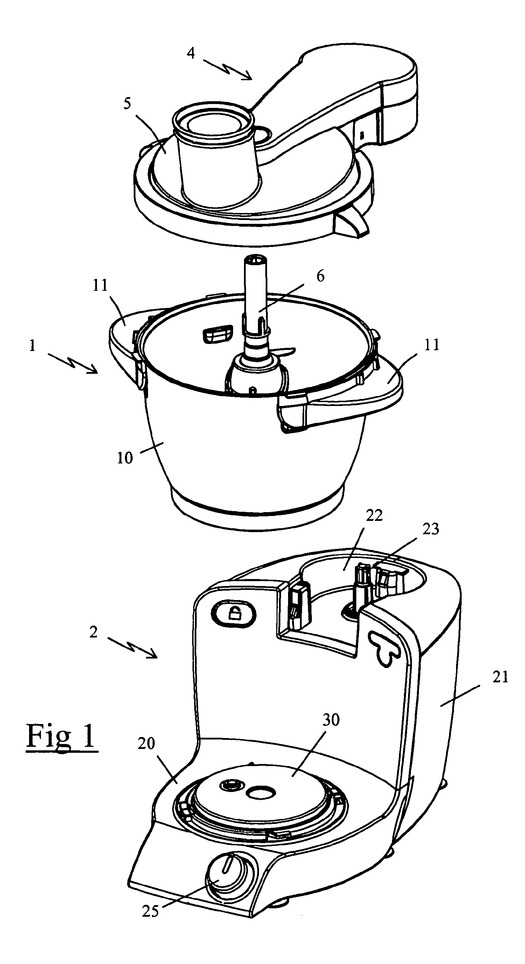

La figure 1 illustre un appareil de préparation culinaire comportant un récipient de travail 1 monté de manière amovible sur un socle de réception 20 d'un boîtier 2 en forme de L, le boîtier 2 comprenant un caisson 21 s'étendant verticalement en bordure du socle de réception 20 et comportant une extrémité supérieure munie d'un logement 22 au centre duquel s'élève un entraîneur 23 entraîné en rotation par un moteur intégré dans le caisson 21, l'appareil comportant avantageusement un bouton de commande 25 sur la face avant du socle de réception 20, permettant de contrôler la vitesse de rotation du moteur.

L'appareil comporte également un bras de transmission 4 amovible dont une extrémité vient s'engager dans le logement 22 du boîtier 2 et l'autre extrémité s'étend au dessus du récipient de travail 1 et supporte un couvercle 5 de fermeture du récipient de travail 1.

Comme cela est décrit plus en détail dans la demande de brevet FR 08 06932 déposée par la demanderesse, le bras de transmission 4 renferme une courroie assurant la transmission du mouvement de rotation de l'entraîneur 23 vers une douille d'entraînement venant s'accoupler avec l'extrémité supérieure d'un outil rotatif 6, disposé au centre du récipient de travail 1, lorsque le bras de transmission 4 est installé dans le logement 22.

De manière préférentielle, le récipient de travail 1 comprend une enveloppe 10 réalisée en matériau thermiquement conducteur, par exemple dans une tôle en acier inoxydable d'une épaisseur de l'ordre de 0,8 mm, sur laquelle sont fixées deux poignées de préhension 11.

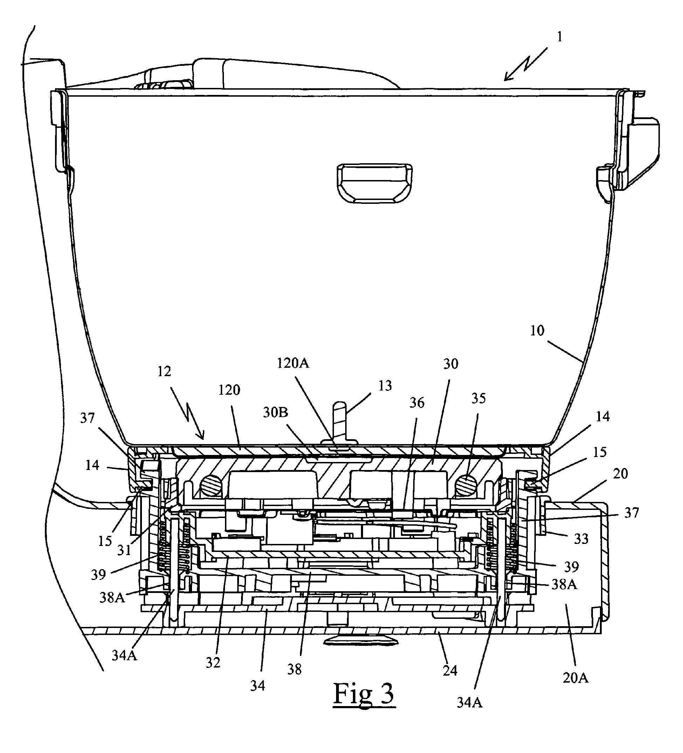

Comme on peut mieux le voir sur la figure 3, le récipient de travail 1 comporte un fond 12 sensiblement circulaire comprenant une face supérieure plane, définie par l'enveloppe 10 du récipient de travail, et un diffuseur thermique 120 présentant la forme d'une galette rapportée par soudage, ou par collage, contre l'enveloppe 10. De manière préférentielle, le fond 12 présente un diamètre de l'ordre de 15 cm et le diffuseur thermique 120 s'étend sur un diamètre de l'ordre de 12 cm et sur une épaisseur de l'ordre de 4 mm en étant réalisé en cuivre ou en aluminium.

La face supérieure du fond 12 du récipient supporte en son centre un axe 13 assurant le guidage de la partie inférieure de l'outil rotatif 6, le diffuseur thermique 120 comportant préférentiellement une cavité 120A en regard de l'axe 13 formant une pellicule d'air isolante limitant le transfert thermique vers l'axe 13.

Le récipient 1 comporte également une jupe périphérique 14 s'étendant dans le prolongement de l'enveloppe 10, sur une hauteur de l'ordre de 2 cm, la jupe périphérique 14 étant préférentiellement réalisée en matériau plastique thermodurcissable et étant fixée contre le fond 12 du récipient à la périphérie du diffuseur thermique 120.

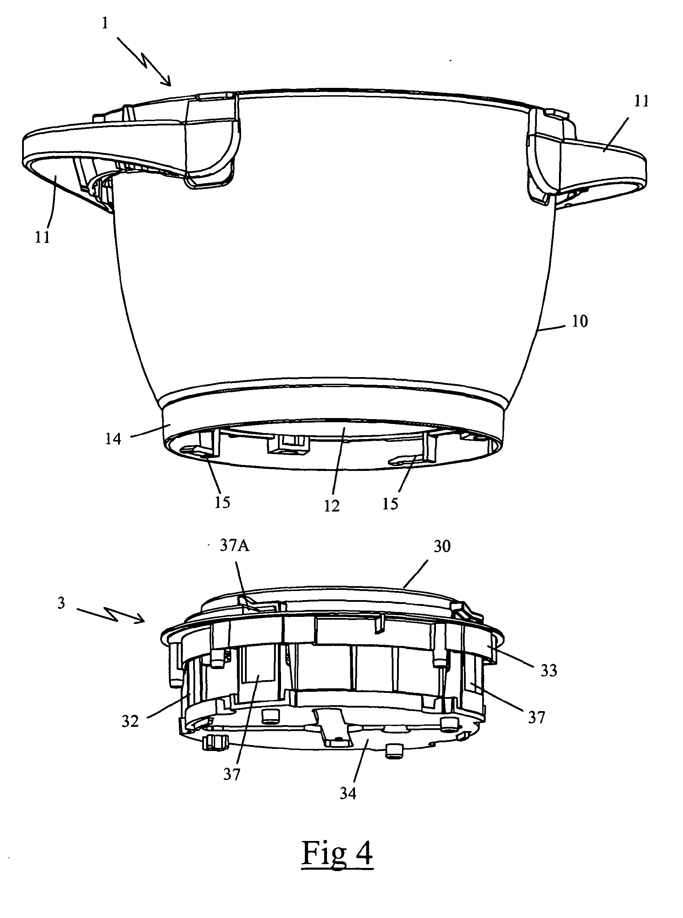

Conformément à la figure 4, la face interne de la jupe périphérique 14 comporte quatre ergots 15, répartis à 90° les uns des autres, ces ergots 15 constituant la première partie d'une liaison baïonnette permettant de verrouiller le récipient de travail 1 sur le socle de réception 20.

Plus particulièrement selon l'invention, le socle de réception 20 du récipient de travail 1 comporte une plaque chauffante 30 destinée à être appliquée contre le fond 12 du récipient de travail 1 et notamment contre le diffuseur thermique 120.

De manière avantageuse, cette plaque chauffante 30 est portée par un module de chauffage 3 qui forme un ensemble monobloc pouvant être assemblé en dehors du boîtier 2, lors du processus de fabrication de l'appareil, puis qui est rapporté dans une cavité 20A du socle de réception où il est fixé par des vis, non visibles sur les figures, la face supérieure du socle de réception 20 comportant une ouverture circulaire par laquelle le module de chauffage 3 peut être introduit dans la cavité 20A.

Conformément aux figures 3 à 6, le module de chauffage 3 comporte une bague 31 circulaire, isolante, sur laquelle repose la plaque chauffante 30, la bague 31 étant supportée par un châssis 32 en matière plastique et étant entourée par une couronne 33 périphérique s'étendant tout autour de la plaque chauffante 30, la couronne 33 comprenant un rebord venant en bordure de l'ouverture de la cavité 20A afin d'assurer une étanchéité entre le module de chauffage 3 et la cavité 20A.

Le module de chauffage 3 comporte également une embase 34 qui est fixée par des vis, non représentées sur les figures, sur la face inférieure du châssis 32, l'embase 34 étant elle-même fixée contre une paroi inférieure 24 du boîtier 2 de sorte que la plaque chauffante 30 est rendue immobile et solidaire du socle de réception 20 du boîtier à la fin du processus de fabrication de l'appareil.

De manière préférentielle, la plaque chauffante 30 est constituée par un disque en aluminium qui fait saillie sur le socle de réception 20, la face supérieure de la plaque chauffante 30 étant surélevée de l'ordre de 16 mm par rapport à la face supérieur du socle de réception 20. La plaque chauffante 30 est chauffée au moyen d'une résistance électrique blindée 35 annulaire rapportée sous la plaque chauffante 30, le module de chauffage 3 comprenant un écran thermique 36, constitué par une tôle métallique, s'étendant sous la plaque chauffante 30, l'écran thermique 36 étant interposé entre la bague 31 et le châssis 32.

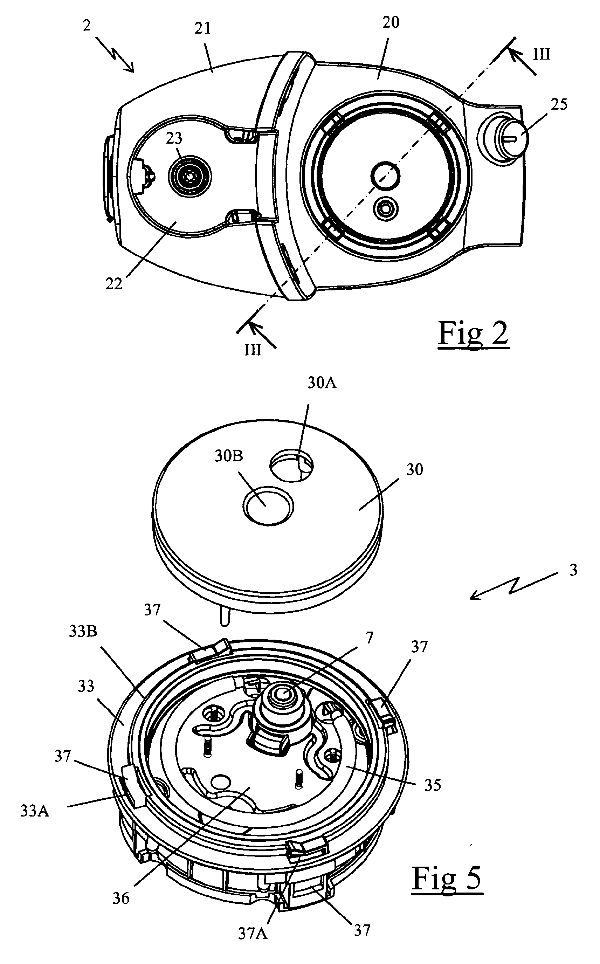

Conformément à la figure 5, la plaque chauffante 30 comporte avantageusement une ouverture 30A permettant le passage d'une sonde de température 7 faisant saillie à la surface de la plaque chauffante 30, la sonde de température 7 étant montée élastiquement de manière à s'enfoncer et à venir dans le plan de la surface supérieure de la plaque chauffante 30 lorsque le fond 12 du récipient est appliqué contre la plaque chauffante 30. La plaque chauffante 30 comporte également un renfoncement central 30B d'un diamètre de l'ordre 2 cm limitant le transfert thermique dans la zone centrale du récipient 1 comportant l'axe 13 de guidage de l'outil rotatif 6.

Afin de permettre la fixation du récipient de travail 1 sur le boîtier 2, la couronne 33 périphérique du module de chauffage 3 comprend quatre ouvertures 33A réparties à 90° les unes des autres, chaque ouverture 33A permettant le passage d'une patte 37 comprenant une extrémité supérieure munie d'une rampe de verrouillage 37A venant coopérer avec les ergots 15 de la jupe périphérique 14 du récipient de travail 1 pour former la deuxième partie de la liaison baïonnette assurant l'immobilisation du récipient de travail 1 sur le socle de réception 20.

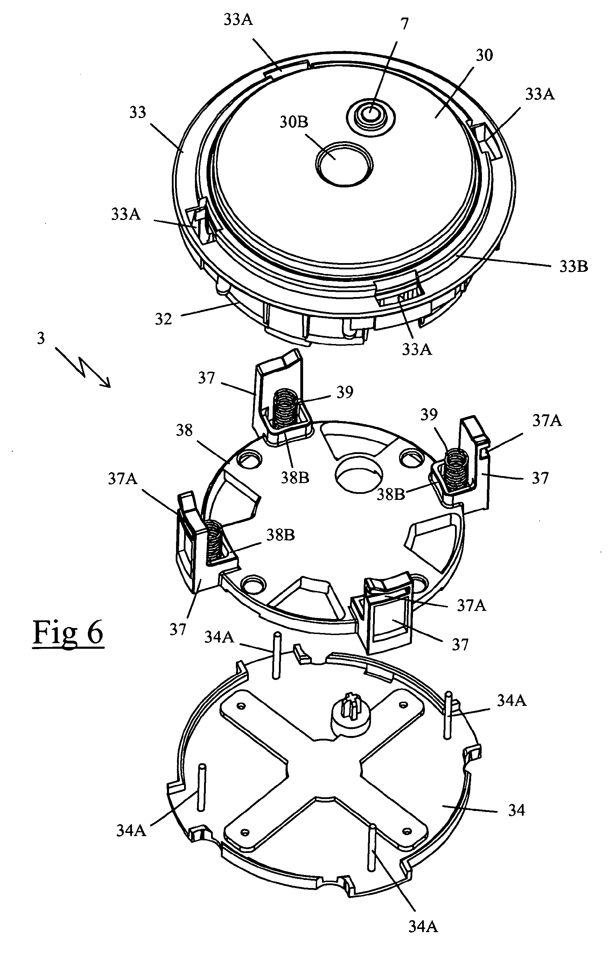

Comme on peut mieux le voir sur les figures 3 et 6, les pattes 37 sont solidaires d'un disque support 38 s'étendant dans le module de chauffage 3 sous le châssis 32, le disque support 38 pouvant coulisser perpendiculairement au plan de la plaque chauffante 30, à l'intérieur du module de chauffage 3, le long de quatre axes de guidage 34A traversant des orifices 38A disposés en bordure des pattes 37, les axes de guidages 34A étant portés par l'embase 34 rapportée sous le châssis 32.

Le disque support 38 comporte, autour de chaque orifice 38A, une cavité 38B recevant un ressort 39 s'étendant atour de l'axe de guidage 34A, ce ressort 39 prenant appui d'une part sur le disque support 38 et d'autre part sur le châssis 32 du module de chauffage 3 de sorte que les quatre ressorts 39 exercent un effort tendant à écarter le disque support 38 du châssis 32 et donc à ramener les rampes de verrouillage 37A vers le bas, c'est-à-dire vers l'intérieur du module de chauffage 3.

L'appareil ainsi réalisé présente l'avantage d'être équipé d'un dispositif de verrouillage du récipient de travail 1 sur le socle de réception 20 qui est très simple à mettre en oeuvre.

En effet, lorsque l'utilisateur souhaite accoupler le récipient de travail 1 sur le boîtier 2, il amène le récipient de travail 1 sur le socle de réception 20 de manière à ce que la jupe périphérique 14 du récipient de travail 1 vienne s'engager autour de la plaque chauffante 30, et notamment sur la couronne 33, cette dernière comportant un épaulement 33B dont le diamètre correspond au diamètre intérieur de la jupe périphérique 14 de sorte que ces derniers coopèrent pour effectuer un centrage du récipient de travail 1 sur la plaque chauffante 30.

Le fond 12 du récipient vient alors au contact de la sonde de température 7 qui s'enfonce sous le poids du récipient de travail 1 jusqu'à ce que le fond 12, et notamment le diffuseur thermique 120, parvienne au contact de la plaque chauffante 30, la hauteur de la jupe périphérique 14 étant adaptée pour que le fond 12 du récipient de travail 1 parvienne au contact de la plaque chauffante 30 sans que l'extrémité inférieure de la jupe périphérique 14 ne vienne buter contre la couronne 33 du module de chauffage 3.

Le récipient de travail 1 peut alors être verrouillé sur le socle de réception 20, et plus particulièrement sur le module de chauffage 3, par un mouvement de rotation du récipient de travail 1 selon le sens anti-horaire de sorte que les ergots 15 présents sur la jupe périphérique 14 s'engagent dans les rampes de verrouillage 37A faisant saillie au travers des ouvertures 33A de la couronne 33. Cet engagement des ergots 15 dans la rampe de verrouillage 37A provoque le soulèvement des pattes 37 et donc la compression des ressorts 39 qui exercent en retour un effort de rappel qui contraint le fond 12 du récipient contre la plaque chauffante 30.

On obtient ainsi un dispositif de verrouillage exerçant une pression permanente sur le récipient de travail, quelles que soient l'usure de la liaison baïonnette ou les dispersions de fabrication, permettant ainsi l'obtention d'un très bon transfert thermique.

De plus, un tel appareil présente l'avantage de posséder une plaque chauffante qui reste immobile par rapport au boîtier, ce qui permet de simplifier la connexion électrique de la plaque chauffante tout en garantissant une bonne fiabilité dans le temps.

L'appareil ainsi réalisé présente également l'avantage de posséder un récipient de travail possédant un fond qui est surélevé par une jupe périphérique qui forme une barrière de protection qui limite le risque de déformation du fond par un choc lors de la manipulation du récipient.

Enfin, l'éventuel liquide pouvant pénétrer dans les ouvertures prévues pour le passage des rampes de verrouillage s'écoulera le long des pattes pour ressortir dans le socle de réception sous la zone comprenant la plaque chauffante sans risquer de provoquer des courts-circuits, la paroi inférieure du boîtier comprenant des ouvertures permettant l'évacuation du liquide sur le plan de travail sur lequel repose l'appareil.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi dans une variante de réalisation, la résistance blindée de la plaque pourra être remplacée par une résistance sérigraphiée.

## Revendications

1. Appareil électroménager de préparation culinaire comportant un récipient de travail (1) comprenant un fond (12) surmonté d'une enveloppe (10) et un boîtier (2) renfermant un moteur pour l'entraînement d'un outil rotatif (6) disposé dans le récipient de travail (1), ledit boîtier (2) comportant un socle de réception (20) sur lequel ledit récipient de travail (1) peut être monté de manière amovible, ledit socle de réception (20) comportant une plaque chauffante (30) destinée à venir au contact thermique du fond (12) du récipient de travail (1) et des moyens d'accouplement permettant de verrouiller le récipient de travail (1) sur ledit socle de réception (20), **caractérisé en ce que** lesdits moyens d'accouplement comprennent des moyens de rappel (39) générant un effort tendant à déplacer le récipient de travail (1) vers la plaque chauffante afin d'appliquer le fond (12) du récipient de travail (1) sous contrainte contre ladite plaque chauffante (30).

2. Appareil électroménager de préparation culinaire selon la revendication 1, **caractérisé en ce que** lesdits moyens de rappel (39) sont des moyens de rappel élastiques qui sont mis sous tension lorsque le récipient de travail (1) est verrouillé sur le socle de réception (20).

3. Appareil électroménager de préparation culinaire selon l'une quelconque des revendications 1 à 2, **caractérisé en ce que** ladite plaque chauffante (30) est montée de manière fixe sur ledit socle de réception (20).

4. Appareil électroménager de préparation culinaire selon l'une quelconque des revendications 1 à 3, **caractérisé en ce que** ladite plaque chauffante (30) fait saillie sur le socle de réception (20).

5. Appareil électroménager de préparation culinaire selon la revendication 4, **caractérisé en ce que** ledit récipient de travail (1) comporte une jupe périphérique (14) s'étendant sous le fond (12) du récipient de travail (1).

6. Appareil électroménager de préparation culinaire selon l'une quelconque des revendications 1 à 5, **caractérisé en ce que** lesdits moyens d'accouplement comprennent une liaison de type baïonnette.

7. Appareil électroménager de préparation culinaire selon la revendication 6, **caractérisé en ce que** ladite liaison de type baïonnette comprend des rampes de verrouillage (37A) portées par ledit boîtier (2) coopérant avec des ergots (15) portés par le récipient de travail (1).

8. Appareil électroménager de préparation culinaire selon la revendication 7, **caractérisé en ce que** lesdites rampes de verrouillage (37A) sont solidaires d'un élément support (38) monté mobile en translation par rapport au socle de réception (20), selon un axe perpendiculaire au plan de la plaque chauffante (30).

9. Appareil électroménager de préparation culinaire selon la revendication 8, **caractérisé en ce que** ledit élément support (38) est disposé sous la plaque chauffante (30) et **en ce que** lesdits moyens de rappel (39) génèrent un effort tendant à éloigner l'élément support (38) de la plaque chauffante (30).

10. Appareil électroménager de préparation culinaire selon la revendication 9, **caractérisé en ce que** ladite plaque chauffante (30) est portée par un module de chauffage (3) destiné à être monté dans une cavité (20A) du socle de réception (20) et **en ce que** le module de chauffage (3) intègre également ledit élément support (38).

11. Appareil électroménager de préparation culinaire selon l'une quelconque des revendications 1 à 10, **caractérisé en ce que** lesdits moyens de rappel (39) sont des ressorts.

12. Appareil électroménager de préparation culinaire selon l'une quelconque des revendications 1 à 11, **caractérisé en ce que** le fond (12) du récipient comporte un diffuseur thermique (120) rapporté contre une tôle métallique définissant l'enveloppe (10) du récipient (1).

13. Appareil électroménager de préparation culinaire selon l'une quelconque des revendications 1 à 12, **caractérisé en ce que** le fond (12) du récipient de travail (1) supporte un axe (13) de guidage de l'outil rotatif (6) et **en ce que** la plaque chauffante (30) comporte un renfoncement (30B) en regard de l'axe (13) de guidage.

## Claims

1. A household electrical appliance for preparing food, comprising a working vessel (1) including a bottom (12) on which a casing (10) is mounted and a housing (2) containing a motor for driving a rotary tool (6) arranged in the working vessel (1), said housing (2) comprising a receiving base (20) on which said working vessel (1) can be removably mounted, said receiving base (20) comprising a heating plate (30) for thermally contacting the bottom (12) of the working vessel (1) and coupling means for locking the working vessel (1) on said receiving base (20), **characterised in that** said coupling means includes return means (39) generating a force to move the working vessel (1) towards the heating plate in order to forcibly apply the bottom (12) of the working vessel (1) against said heating plate (30).

2. A household electrical appliance for preparing food according to claim 1, **characterised in that** said return means (39) is elastic return means that is stressed when the working vessel (1) is locked on the receiving base (20).

3. A household electrical appliance for preparing food according to any one of claims 1 to 2, **characterised in that** said heating plate (30) is fixedly mounted on said receiving base (20).

4. A household electrical appliance for preparing food according to any one of claims 1 to 3, **characterised in that** said heating plate (30) projects from the receiving base (20).

5. A household electrical appliance for preparing food according to claim 4, **characterised in that** said working vessel (1) includes a peripheral skirt (14) extending beneath the bottom (12) of the working vessel (1).

6. A household electrical appliance for preparing food according to any one of claims 1 to 5, **characterised in that** said coupling means includes a bayonet type connection.

7. A household electrical appliance for preparing food according to claim 6, **characterised in that** said bayonet type connection comprises locking ramps (37A) carried by said housing (2) cooperating with lugs (15) carried by the working vessel (1).

8. A household electrical appliance for preparing food according to claim 7, **characterised in that** said locking ramps (37A) are integral with a support element (38) mounted to move in translation with respect to the receiving base (20), along an axis perpendicular to the plane of the heating plate (30).

9. A household electrical appliance for preparing food according to claim 8, **characterised in that** said support element (38) is arranged beneath the heating plate (30) and **in that** said return means (39) generates a force that moves the support element (38) away from the heating plate (30).

10. A household electrical appliance for preparing food according to claim 9, **characterised in that** said heating plate (30) is carried by a heating module (3) intended to be mounted in a cavity (20A) of the receiving base (20) and **in that** the heating module (3) also integrates said support element (38).

11. A household electrical appliance for preparing food according to any one of claims 1 to 10, **characterised in that** said return means (39) is springs.

12. A household electrical appliance for preparing food according to any one of claims 1 to 11, **characterised in that** the bottom (12) of the vessel contains a thermal diffuser (120) positioned against the metal sheet defining the casing (10) of the vessel (1).

13. A household electrical appliance for preparing food according to any one of claims 1 to 12, **characterised in that** the bottom (12) of the working vessel (1) supports a pin (13) for guiding the rotary tool (6) and **in that** the heating plate (30) contains a recess (30B) opposite the guide pin (13).

## Patentansprüche

1. Elektrohaushaltsgerät für kulinarische Zubereitungen, umfassend einen Arbeitsbehälter (1) mit einem Boden (12), von dem eine Wandung (10) hochragt, und ein Gehäuse (2), das einen Motor für den Antrieb eines Drehwerkzeuges (6) einschließt, das im Arbeitsbehälter (1) angeordnet ist, wobei das Gehäuse (2) einen Aufnahmesockel (20) umfasst, auf dem der Arbeitsbehälter (1) abnehmbar angebracht werden kann, wobei der Aufnahmesockel (20) eine Heizplatte (30) umfasst, die dazu bestimmt ist, mit dem Boden (12) des Arbeitsbehälters (1) in thermischen Kontakt zu treten, und Kopplungsmittel, die ein Verriegeln des Arbeitsbehälters (1) auf dem Aufnahmesockel (20) ermöglichen, **dadurch gekennzeichnet, dass** die Kopplungsmittel Rückstellmittel (39) umfassen, die eine Spannkraft erzeugen, um den Arbeitsbehälter (1) in Richtung Heizplatte zu bewegen, um den Boden (12) des Arbeitsbehälters (1) gegen die Heizplatte (30) zu drücken.

2. Elektrohaushaltsgerät für kulinarische Zubereitungen nach Anspruch 1, **dadurch gekennzeichnet, dass** die Rückstellmittel (39) elastische Rückstellmittel sind, die unter Spannung gesetzt werden, wenn der Arbeitsbehälter (1) auf dem Aufnahmesockel (20) verriegelt wird.

3. Elektrohaushaltsgerät für kulinarische Zubereitungen nach einem der Ansprüche 1 bis 2, **dadurch gekennzeichnet, dass** die Heizplatte (30) festsitzend auf dem Aufnahmesockel (20) befestigt ist.

4. Elektrohaushaltsgerät für kulinarische Zubereitungen nach einem der Ansprüche 1 bis 3, **dadurch gekennzeichnet, dass** die Heizplatte (30) vom Aufnahmesockel (20) vorragt.

5. Elektrohaushaltsgerät für kulinarische Zubereitungen nach Anspruch 4, **dadurch gekennzeichnet, dass** der Arbeitsbehälter (1) eine umlaufende Abdeckung (14) umfasst, die sich unterhalb des Bodens (12) des Arbeitsbehälters (1) erstreckt.

6. Elektrohaushaltsgerät für kulinarische Zubereitungen nach einem der Ansprüche 1 bis 5, **dadurch gekennzeichnet, dass** die Kopplungsmittel eine Art Bajonettverbindung umfassen.

7. Elektrohaushaltsgerät für kulinarische Zubereitungen nach Anspruch 6, **dadurch gekennzeichnet, dass** die Art Bajonettverbindung Verriegelungsrampen (37A) umfasst, die vom Gehäuse (2) getragen werden und die mit Vorsprüngen (15) zusammenwirken, die vom Arbeitsbehälter (1) getragen werden.

8. Elektrohaushaltsgerät für kulinarische Zubereitungen nach Anspruch 7, **dadurch gekennzeichnet, dass** die Verriegelungsrampen (37A) fest mit einem Trägerelement (38) verbunden sind, das in Bezug auf den Aufnahmesockel (20) gemäß einer Achse, die senkrecht zur Ebene der Heizplatte (30) verläuft, verschiebbar befestigt ist.

9. Elektrohaushaltsgerät für kulinarische Zubereitungen nach Anspruch 8, **dadurch gekennzeichnet, dass** das Trägerelement (38) unter der Heizplatte (30) angeordnet ist, und dadurch, dass die Rückstellmittel (39) eine Spannkraft erzeugen, um das Trägerelement (38) von der Heizplatte (30) zu beabstanden.

10. Elektrohaushaltsgerät für kulinarische Zubereitungen nach Anspruch 9, **dadurch gekennzeichnet, dass** die Heizplatte (30) von einem Heizmodul (3) getragen wird, das dazu bestimmt ist, in einem Hohlraum (20A) des Aufnahmesockels (20) angebracht zu werden, und dadurch, dass im Heizmodul (3) auch das Trägerelement (38) integriert ist.

11. Elektrohaushaltsgerät für kulinarische Zubereitungen nach einem der Ansprüche 1 bis 10, **dadurch gekennzeichnet, dass** die Rückstellmittel (39) Federn sind.

12. Elektrohaushaltsgerät für kulinarische Zubereitungen nach einem der Ansprüche 1 bis 11, **dadurch gekennzeichnet, dass** der Boden (12) des Behälters einen Wärmeverteiler (120) umfasst, der an ein Metallblech angefügt ist, das die Wandung (10) des Behälters (1) definiert.

13. Elektrohaushaltsgerät für kulinarische Zubereitungen nach einem der Ansprüche 1 bis 12, **dadurch gekennzeichnet, dass** der Boden (12) des Arbeitsbehälters (1) eine Führungsachse (13) für das Drehwerkzeug (6) trägt, und dadurch, dass die Heizplatte (30) eine Vertiefung (30B) gegenüber der Führungsachse (13) aufweist.
